Europäisches Patentamt

European Patent Office

Office européen des brevets

(19)

(11) Numéro de publication: **0 069 632 B1**

## (12) FASCICULE DE BREVET EUROPEEN

(45) Date de publication du fascicule du brevet:
12.12.84

(51) Int. Cl.³: **F 02 B 37/12**

(21) Numéro de dépôt: 82401161.3

(22) Date de dépôt: 24.06.82

(54) Procédé et dispositif de contrôle du clapet de décharge de l'échappement d'un moteur à combustion interne turbo-compressé.

(30) Priorité: 03.07.81 FR 8113111

(43) Date de publication de la demande:
12.01.83 Bulletin 83/2

(45) Mention de la délivrance du brevet:
12.12.84 Bulletin 84/50

(84) Etats contractants désignés:
BE DE GB IT NL SE

(56) Documents cités:
FR - A - 1 472 398
FR - A - 2 306 339
US - A - 3 233 403

(73) Titulaire: REGIE NATIONALE DES USINES RENAULT,
Boîte postale 103 8-10 avenue Emile Zola,
F-92109 Boulogne-Billancourt (FR)

(72) Inventeur: Nartowski, André, 3, avenue Auguste Renoir,
F-78160 Marly-Le-Roi (FR)

(74) Mandataire: Colas, Jean-Pierre et al, Régie Nationale
des Usines RENAULT 8 et 10 Avenue Emile Zola,
F-92109 Boulogne-Billancourt (FR)

BUNDESDRUCKEREI BERLIN

**Description**

La présente invention se rapporte à un procédé de contrôle du clapet de décharge de l'échappement d'un moteur à combustion interne suralimenté par au moins un turbo-compresseur entraîné en rotation par l'énergie résiduelle des gaz d'échappement ainsi qu'au dispositif pour la mise en œuvre de procédé.

La technique de la suralimentation en air des moteurs à combustion interne en utilisant l'énergie résiduelle des gaz d'échappement s'est développée depuis de nombreuses années selon une évolution variée et progressive. Elle fut d'abord utilisée pour les moteurs d'avion à allumage commandé, afin de leur permettre de rétablir en altitude, où la densité de l'air aspiré est faible, leur puissance au sol sans dommage pour le moteur alors convenablement refroidi par l'air extérieur glacé. Elle se développa ensuite après la deuxième guerre mondiale pour augmenter la puissance et le rendement des moteurs diesel de forte puissance pour lesquels l'énergie d'échappement, plus faible dans ce type de moteur, permettait néanmoins d'installer des groupes turbo-soufflants centrifuges selon un bilan économiquement par un effet d'échelle des grandes tailles de ces moteurs utilisés comme moteurs marins, groupes fixes de grande puissance et, finalement, comme moteurs de traction ferroviaire. Avec les progrès de la technologie des turbo-soufflantes, en particulier du rotor de la turbine soumis aux températures d'échappement élevées (de 600 à 800°C), il devint économiquement possible d'installer des groupes de suralimentation rotatifs ou à onde de pression sur les moteurs diesel des véhicules de transport lourds, puis des véhicules de tourisme de haut de gamme. Une nouvelle évolution économique et technologique des groupes turbo-soufflants de suralimentation encouragée par l'augmentation considérable du coût de l'énergie permet maintenant d'installer des dispositifs de suralimentation sur les moteurs à combustion interne et à allumage commands afin de réduire leur cylindrée à puissance égale.

L'utilisation de la suralimentation en air par l'énergie résiduelle des gaz d'échappement crée, néanmoins, des difficultés techniques nouvelles dans le cas de l'application à des moteurs à allumage commandé. En effet, pour ce type de moteur, la pression de suralimentation tend à être maximale à faible régime de rotation et à forte charge du moteur, ce qui conduit inévitablement à l'apparition d'un phénomène de préallumage et de cliquetis destructeur dans ces conditions de fonctionnement, par suite, non pas d'un taux de compression trop élevé, mais d'une pression du mélange carburé trop élevée avant la compression. Pour parer à cette difficulté, on dispose une valve de contrôle en by-pass de la turbine de telle façon que le clapet de décharge de cette valve soit relié à un piston soumis, dans le sens de l'ouverture et à l'encontre d'un ressort de fermeture du clapet, à la pression d'alimentation en aval du compresseur et en amont du carburateur ou des moyens d'injection de carburant. De cette façon, lorsque la pression de suralimentation en air du moteur dépasse une valeur prédéterminée par le tarage du ressort de fermeture du clapet, celui-ci s'ouvre progressivement et réduit le régime de rotation de la turbine de façon à stabiliser la pression de suralimentation à la valeur prédéterminée.

En examinant les performances obtenues avec les véhicules équipés maintenant de moteurs de cylindrée petite ou moyenne et dotés d'un dispositif de suralimentation par turbosoufflance, il est apparu qu'aux vitesses modérées qui sont pratiquées par la plupart des utilisateurs de ces véhicules, on n'obtenait pas les réductions de consommation qu'on était en droit d'attendre à partir des résultats obtenus à vitesse élevée et que ces résultats médiocres à vitesse modérée dus en partie à la contrepression d'échappement provoquée par l'interposition du rotor de la turbine sur le trajet de décharge des gaz d'échappement.

L'un des buts de la présente invention est précisément de réduire la contrepression d'échappement pour les faibles charges des moteurs à combustion interne suralimentés par l'énergie résiduelle d'échappement du moteur afin de diminuer la consommation à faible charge de ces moteurs.

A cet effet, l'invention propose un dispositif de contrôle du clapet de décharge de l'échappement d'un moteur à combustion interne suralimenté par au moins un ensemble turbine-compresseur entraîné en rotation par l'échappement du moteur, du type décrit dans le brevet FR-A-1 472 398 et comprenant au moins une capsule contenant un piston et un ressort sollicitant le piston dans le sens de la fermeture du clapet, le piston étant soumis d'une part à la pression d'alimentation en air du moteur régnant à l'aval du compresseur pour provoquer l'ouverture du clapet et courtcircuiter la turbine lorsque la pression d'alimentation du moteur dépasse une valeur limite prédéterminée, et d'autre part à une pression de fluide de contrôle adaptée pour provoquer l'ouverture du clapet de décharge aux faibles charges du moteur. Ce dispositif comprend en outre une valve de contrôle commandée par le levier d'accélération du moteur pour appliquer la pression de fluide de contrôle au piston uniquement lorsque le levier est placé dans une zone correspondant auxdites faibles charges du moteur.

De plus, il est connu par le brevet FR-A-2 306 339, de compléter un dispositif de contrôle du clapet de décharge de l'échappement du moteur par une valve de contrôle supplémentaire reliée à une valve à papillon et interposée entre une source de pression/décharge et une chambre de contrôle qui commande l'ouverture/fermeture du clapet de décharge de gaz d'échappement.

La présente invention présente un tel dispositif de contrôle de clapet de décharge dans lequel la valve de contrôle est susceptible, d'une part d'être mise en position d'ouverture pour appliquer la pression de fluide de contrôle à une chambre de contrôle délimitée par au moins une partie de la surface du piston, et provoquer l'ouverture du clapet de décharge lorsque le levier d'accélération du moteur est placé dans la zone correspondant aux faibles charges du moteur et, d'autre part, de relier la chambre de contrôle à la décharge ou à l'atmosphère lorsque le levier d'accélération du moteur est placé dans la zone correspondant aux fortes du moteur pour permettre au clapet de décharge de se refermer sous l'action de son ressort.

Suivant une particularité de l'invention, la valve de contrôle est une électrovalve commandée par le levier d'accélération au moyen d'un circuit électrique d'actionnement dont les contacts de coupure ou respectivement d'établissement du circuit sont actionnés par une came ou un poussoir relié mécaniquement au levier d'accélération.

On utilise de préférence comme pression de contrôle la dépression provoquée par l'aspiration du moteur ou d'une pompe à vide, cette dépression agissant directement sur la face du piston de contrôle opposée à celle qui est soumise à la pression d'alimentation régnant en aval du compresseur. La régularisation de la contrepression d'échappement utilise ainsi une énergie disponible gratuitement sur tous les véhicules modernes.

La face du piston soumise à la dépression sert de face d'appui pour un ressort de compression repoussant le clapet de décharge en position de fermeture, ce qui permet de disposer d'un équipage de régulation très compact. La régulation de la pression de fluide de contrôle par le levier d'accélération du moteur s'effectue par l'intermédiaire d'une électrovalve dont le courant électrique de commande est contrôle par le levier d'accélération. La pression de fluide de contrôle peut également être une pression hydraulique ou pneumatique agissant sur le piston de contrôle à l'encontre du ressort de fermeture du clapet.

Selon le mode de réalisation le plus courant et pratique de l'invention, la chambre de contrôle est délimitée par le piston de contrôle du côté opposé à celui soumis à la pression d'alimentation du moteur et contient un ressort hélicoïdal de compression qui repousse le clapet en position de fermeture, la source de pression de contrôle est constituée par la dépression d'aspiration du moteur ou d'une pompe à vide de telle manière que la dépression agissant sur le piston et ajoutant son action à celle de la pression d'alimentation du moteur à l'aval du compresseur soit capable de surmonter le tarage du ressort et de provoquer l'ouverture du clapet de décharge pour les faibles charges du moteur, et la valve de contrôle est susceptible de relier la chambre de contrôle à l'atmosphère par l'intermédiaire des moyens de commande reliés au levier d'accélération du moteur lorsque ce levier est placé dans la zone correspondant aux fortes charges du moteur de manière à permettre au clapet de se refermer lorsque la pression d'alimentation en air du moteur à l'aval immédiat du compresseur n'a pas atteint la valeur limite prédéterminée provoquant son ouverture.

Un moyen de temporisation tel qu'un étranglement peut être interposé sur la conduite reliant la valve de contrôle à la chambre de contrôle afin de retarder l'ouverture et/ou la fer-meture du clapet de décharge sous l'effet des déplacements du levier d'accélération du moteur.

L'étranglement est susceptible d'être court-circuité par un moyen d'écoulement unidirectionnel, tel qu'un clapet anti-retour, permettant l'ouverture rapide du clapet de décharge et sa fermeture lente ou vice versa.

Selon un mode d'exploitation pratique de l'invention, lorsque le moteur à combustion interne est utilisé pour la propulsion d'un véhicule automobile, le levier d'accélération de ce véhicule peut avantageusement être rendu apte à réguler la pression de fluide de contrôle pour provoquer l'ouverture du clapet de décharge jusqu'à une position du levier correspondant sensiblement à une vitesse stabilisée comprise entre 2/3 et 3/4 de la vitesse maximale du véhicule en palier pour laquelle la suralimentation de l'admission du moteur commence à améliorer le rendement du moteur.

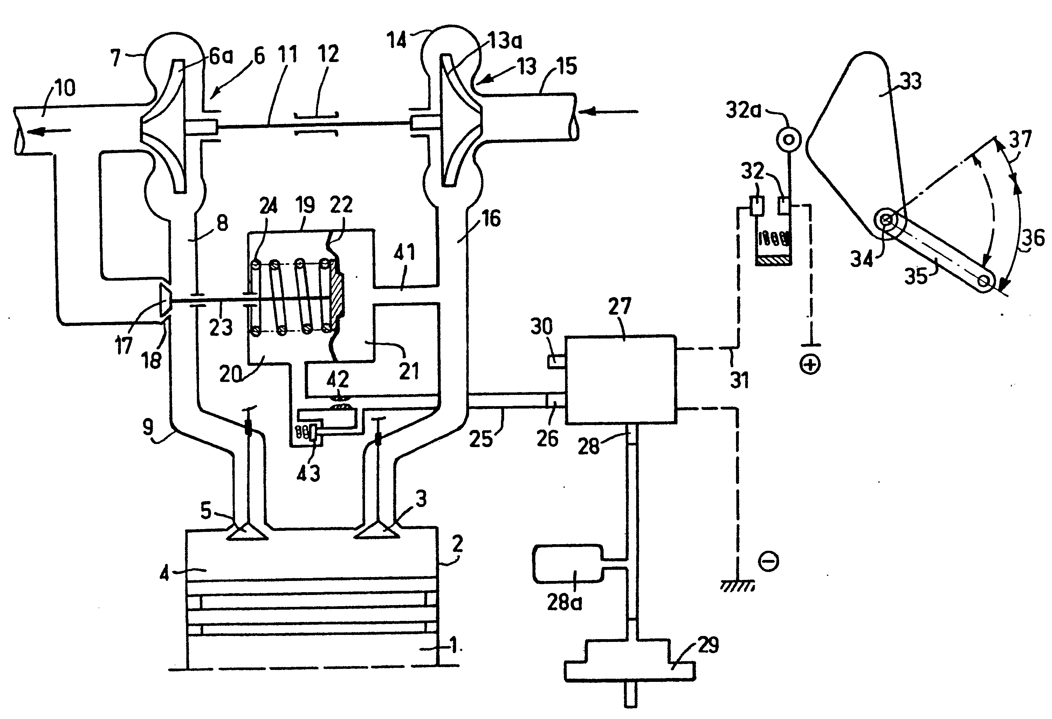

D'autes buts, avantages et caractéristiques de la présente invention apparaîtront à la lecture de la description qui va suivre d'un mode de réalisation non limitatif de l'invention, faite en regard du dessin annexé où la figure unique représente en coupe schématique le dispositif de contrôle du clapet de décharge de l'échappement d'un moteur à combustion interne, à allumage commandé ou à allumage par compression, doté d'un turbocompresseur de suralimentation entraîné par l'échappement du moteur.

Selon la figure, le moteur est représenté schématiquement par un piston 1 qui se déplace à l'intérieur d'un cylindre 2 pour successivement: aspirer un mélange carburé à travers le passage annulaire ménagé autour d'une soupape d'admission 3 ouverte, puis le comprimer dans une chambre de combustion 4 et, après allumage et détente du mélange carburé brûlé, refouler les gaz brûlés à travers le passage annulaire ménagé autour d'une soupape d'échappement 5 ouverte.

Le moteur est équipé d'une installation de suralimentation en air constituée d'une turbine centrifuge 6 dont le rotor 6a, logé à l'intérieur d'une volute 7, est placé sur le trajet des gaz d'échappement d'un conduit 8 d'amenée à la turbine relié à une pipe d'échappement 9 branchée directement sur la sortie de la soupape d'échappement 5. L'entrée de la turbine 6 est radiale et l'écoulement centripète des gaz d'échappement aboutit à une sortie axiale reliée au conduit d'échappement 10 proprement dit. Le rotor de turbine 6a est relié par un arbre 11 supporté par un palier 12, généralement lubrifié par la pression d'huile du moteur, à un rotor 13a d'un compresseur 13 logé dans une volute 14 et relié par une conduite d'entrée 15 à des moyens d'entrée d'air généralement constitués par au moins un filtre à air.

Le rotor de compresseur 13a entraîné en rotation par le rotor de turbine 6a, aspire l'air de combustion du moteur axialement et le refoule radialement selon un écoulement centrifuge vers un collecteur d'admission 16 qui débouche sur l'entrée de la soupape d'admission 3.

Afin de limiter la pression d'admission dans le collecteur 16 et dans la chambre de combustion 4 et, par voie de conséquence, la pression maximale de combustion s'exerçant sur le piston 1 dans le cas d'un moteur diesel et, respectivement, le risque de cliquetis dans le cas d'un moteur à allumage commandé, le circuit de la turbine 6 est muni d'un système de dérivation constitué d'un clapet de décharge 17 en appui sur un siège conique 18.

Le clapet 17, en se décollant du siège 18, ouvre un passage annulaire qui permet aux gaz d'échappement de se décharger directement de la pipe d'échappement 9 au conduit d'échappement 10 en court-circuitant le passage de ces gaz le long des ailettes du rotor de turbine 6a. Le débit de gaz d'échappement à travers la turbine 6 est ainsi réduit, ce qui diminue considérablement la vitesse de rotation des rotors 6a et 13a et, par conséquent, la pression de refoulement du compresseur dans le collecteur d'admission 16.

La régulation de la pression d'air dans le collecteur d'admission 16 est obtenue à l'aide d'une capsule de régulation 19 qui comporte deux chambres 20 et 21 séparées par un piston 22, généralement du type à membrane pour obtenir une étanchéité parfaite et une faible hystérésis de fonctionnement. Selon l'état de la technique, la chambre 21 est reliée au collecteur d'admission en aval du compresseur 13 et la pression d'air de suralimentation régnant dans cette chambre 21 agit sur le piston 22 relié par une tige 23 au clapet de décharge 17, à l'encontre d'un ressort hélicoïdal 24 logé dans la chambre 20. Lorsque la pression dans le collecteur 16 à l'aval du compresseur 13 et agissant sur le piston 22 dépasse le tarage du ressort 24, le clapet 17 se décolle de son siège 18 et un débit de gaz d'échappement croissant se décharge directement au conduit d'échappement 10, ce qui réduit la vitesse des rotors de turbine 6a et de compresseur 13a et stabilise immédiatement la pression de suralimentation dans le collecteur d'admission 16.

Selon l'invention, la chambre 20 qui contient le ressort 24 est reliée par une conduite 25 au raccord de sortie 26 d'une électrovalve 27 reliée respectivement, par un raccord 28 à travers un réservoir 28a à une source de dépression constituée, par exemple, par une pompe à vide 29 ou par l'aspiration du moteur, et par un raccord 30 à l'atmosphère. L'électrovalve 27 est commandée par un circuit électrique 31 alimenté par exemple par une batterie à travers un interrupteur 32 dont les contacts sont contrôlés par une came 33 agissant sur un poussoir 32a et solidaire en rotation autour d'un axe 34 du levier d'accélération 35 du moteur qui se déplace respectivement d'une zone 36 des faibles charges du moteur vers une zone 37 correspondant aux fortes charges du moteur. Lorsque l'interrupteur 32 est ouvert et que le circuit 31 est coupé tel que représenté sur la figure, c'est-à-dire pour la position du levier d'accélération du moteur correspondant aux faibles charges du moteur, l'électrovalve 27 est amenée par un ressort interne dans une position reliant la source de dépression 29 à la chambre 20. Par contre, lorsque le levier 35 est amené dans la zone 37 correspondant aux fortes charges du moteur, l'interrupteur 32 est fermé et le circuit électrique 31 mis sous tension provoque la commutation des clapets internes de la valve 27 qui isole la chambre 20 de la source de dépression 27 et la relie à l'atmosphère par le raccord 30.

Le fonctionnement du dispositif de contrôle du clapet de décharge de l'échappement va maintenant être explicité. Lorsque le véhicule dont le moteur est équipé d'un ensemble turbocompresseur régulé selon l'invention, roule à vitesse modérée stabilisée, le levier d'accélérateur 35 est placé dans la zone 36 correspondant aux faibles charges du moteur et la came 33 est placée comme représenté sur la figure. L'interrupteur 32 est ouvert et la chambre 20 est reliée à la source de dépression 29.

La pression voisine de la pression atmosphérique régnant dans la chambre 21 agit en opposition à la dépression régnant dans la chambre 20 et repousse le clapet de décharge 17 en position d'ouverture à l'encontre du ressort 24. Les aubages du rotor de turbine 6a sont parcourus par une partie seulement des gaz brûlés d'échappement et les rotors de turbine 6a et de compresseur 13 tournent à une vitesse modérée qui refoule avec une faible surpression dans le collecteur d'admission 16 l'air qui est finalement aspiré par la dépression régnant à l'aspiration dans la chambre de combustion 4.

La surpression par rapport à l'atmosphère régnant dans la pipe d'échappement 9 au moment de l'ouverture de la soupape d'échappement 5 est faible mais croît néanmoins avec la vitesse du véhicule. Elle reste cependant sensiblement inférieure à la contrepression d'échappement des moteurs suralimentés conventionnels dépourvus de moyens d'ouverture du clapet 17 aux faibles charges.

Si le conducteur accélère le véhicule en plaçant le levier d'accélération 35 dans la zone 37 correspondant aux fortes charges du moteur, par exemple pour dépasser un autre véhicule, les contacts de l'interrupteur 32 se ferment, l'électrovalve 27 est excitée et relie la chambre 20 à l'atmosphère. Le ressort 24 referme le clapet 17 sur son siège 18 et la contrepression d'échappement régnant dans la pipe d'échappement 9 accélère rapidement les rotors de turbine 6a et de compresseur 13a pour provoquer, après un court délai, une surpression dans le collecteur d'admission 16 croissante avec la vitesse de rotation du moteur qui augmente le débit des gaz d'échappement.

Lorsque le régime du moteur à pleine accélération atteint une vitesse correspondant sensiblement à 75% de la vitesse du moteur à sa puissance maximale, la pression de suralimentation régnant dans la chambre 21 est suffisante pour repousser le clapet 17 en position d'ouverture à l'encontre du ressort 24 et la pression de suralimentation n'augmente plus. Cette stabilisation de la pression de suralimentation permet, pour les moteurs à allumage commandé, d'éviter le cliquetis, c'est-à-dire la combustion explosive, et pour les moteurs diesel, de limiter la charge sur les pistons et les paliers, à haut régime.

Lorsque le conducteur relâche sa pression sur la pédale d'accélérateur, par exemple après un dépassement ou en descente, l'interrupteur 32 s'ouvre à nouveau et l'électrovalve 27 relie à nouveau la chambre 20 à la source de dépression 29, et le clapet de décharge 17 s'ouvre, provoquant un freinage rapide des rotors 6a et 13a et la disparition quasi instantanée de la surpression dans la pipe d'échappement 9.

Le dispositif de contrôle du clapet de décharge qui vient d'être décrit s'applique aussi bien aux moteurs diesel (l'injecteur de carburant n'a pas été représenté sur la figure) qu'aux moteurs à allumage commandé et à carburateur ou injection de carburant à l'aval du compresseur 13, que ces moteurs soient utilisés sur des véhicules, notamment des véhicules automobiles, ou à poste fixe.

Dans certains cas d'application, il peut être intéressant de temporiser l'ouverture ou la fermeture du clapet 17 après l'ouverture et, respectivement, la fermeture de l'interrupteur 32. On a représenté pour cela un étranglement de temporisation 42 interposé sur la conduite 25. L'étranglement 42 peut être court-circuité par un clapet anti-retour 43 s'ouvrant lorsque la chambre 20 est reliée à l'atmosphère par la valve 27 lorsque le levier d'accélération 35 est amené dans la zone 37 des fortes charges du moteur. L'accélération des rotors 6a et 13a nécessaire pour augmenter la puissance du moteur et déjà naturellement temporisée par leur intertie élevée à leurs vitesses de rotation courantes (jusqu'à 100 000 tours par minute) n'est ainsi par réduite par la temporisation de la commande du clapet de décharge. Le clapet anti-retour 43 peut être disposé en sens inverse pour protéger la turbosoufflante au démarrage à froid avant l'établissement d'un bon graissage. Les à-coups d'accélération restent ainsi pratiquement sans effet sur le clapet de décharge 17, mais l'agrément de conduite du véhicule qui ne dispose plus d'une surpuissance rapide à forte accélération, disparaît.

Bien entendu, la présente invention n'est nullement limitée au mode de réalisation décrit et représenté; elle est susceptible de nombreuses variantes accessibles à l'homme de l'art, suivant les applications envisagées et sans que l'on ne s'écarte de l'esprit de l'invention.

Ainsi, on doit comprendre que l'électrovalve 27 peut être une valve de forte section à commande entièrement pneumatique ou hydraulique et pilotée par une électrovalve de plus faible section et contrôlée par l'interrupteur 32 qui peut être temporisé.

Pour les véhicules qui ne possèdent pas de source de dépression tels que les véhicules de transport lourds, mais qui disposent d'air comprimé ou d'huile sous pression, la capsule de régulation 19 peut comporter une chambre susceptible d'être reliée à une source d'air comprimé ou de pression hydraulique et délimitée par une partie du piston 20 ou un piston lié au piston 20 et sur laquelle (ou respectivement lequel) s'exerce la pression de régulation dans le sens de l'ouverture du clapet 17. De même, l'interrupteur 32 peut être remplacé par l'actionnement mécanique direct ou télécommandé d'une valve de contrôle remplissant les fonctions de l'électrovalve 27. Le circuit 31 peut être coupé par d'autres interrupteurs que l'interrupteur 32 pour réaliser par exemple une commande manuelle de l'ouverture du clapet 17 ou bien pour coupler l'ouverture du clapet 17 à la coupure de l'allumage ou de l'injection du moteur.

**Revendications**

1. Dispositif de contrôle du clapet de décharge (17) de l'échappement d'un moteur à combustion interne suralimenté par au moins un ensemble turbine-compresseur entraîné en rotation par l'échappement du moteur, comprenant au moins une capsule contenant un piston (22) et un ressort (24) sollicitant le piston dans le sens de la fermeture du clapet, le piston étant soumis, d'une part à la pression d'alimentation en air du moteur régnant à l'aval du compresseur pour provoquer l'ouverture du clapet et court-circuiter la turbine lorsque la pression d'alimentation du moteur dépasse une valeur limite prédéterminée, et d'autre part à une pression de fluide de contrôle adaptée pour provoquer l'ouverture du clapet de décharge (17) aux faibles charges du moteur, une valve de contrôle (27) commandée par le levier d'accélération (35) du moteur pour appliquer la pression de fluide de contrôle au piston uniquement lorsque le levier (35) est placé dans une zone (36) correspondant auxdites faibles charges du moteur, cette valve de contrôle (27) étant susceptible, d'une part d'être mis en position d'ouverture pour appliquer la pression de fluide de contrôle à une chambre de contrôle (20) délimitée par au moins une partie de la surface du piston (22), et provoquer l'ouverture du clapet de décharge (17) lorsque le levier (35) est placé dans la zone (ou les crans) (36) correspondant aux faibles charges du moteur et, d'autre part, de relier la chambre de contrôle (20) à la décharge ou à l'atmosphère (30) lorsque le levier d'accélération (35) du moteur est placé dans la zone (37) correspondant aux fortes charges du moteur pour permettre au clapet (17) de se refermer sous l'action de son ressort (24), dispositif caractérisé en ce que la valve de contrôle (27) est une électrovalve commandée par le levier d'accélération au moyen d'un circuit électrique d'actionnement (31, 32) dont les contacts (32) des coupure ou respectivement d'établissement du circuit sont actionnés par une came ou un poussoir (33) relié mécaniquement au levier d'accélération (35).

2. Dispositif selon la revendication 1, caractérisé en ce que la chambre de contrôle (20) est délimitée par le piston de contrôle (22) du côté opposé à celui soumis à la pression d'alimentation du moteur et contient le ressort (24) qui repousse le clapet (17) en position de fermeture, la pression de fluide de contrôle étant constituée par la dépression d'aspiration du moteur ou d'une pompe à vide.

3. Dispositif selon l'une quelconque des revendications 1 et 2, caractérisé en ce qu'un moyen de temporisation tel qu'un étranglement (42) est interposé sur la conduite (25) reliant la valve de contrôle (27) à la chambre de contrôle (20) afin de retarder l'ouverture et/ou la fermeture du clapet de décharge (17) sous l'effet des déplacements du levier d'accélération (35) du moteur.

4. Dispositif selon la revendication 3, caractérisé en ce que l'étranglement (42) est susceptible d'être court-circuité par un moyen d'écoulement uni-directionnel, tel qu'un clapet anti-retour (43), permettant l'ouverture rapide du clapet de décharge (17) et sa fermeture lente ou vice versa.

5. Dispositif selon l'une quelconque des revendications 1 à 4, caractérisé en ce que, lorsque le moteur à combustion interne est utilisé pour la propulsion d'un véhicule automobile, ladite zone (36) correspondant aux faibles charges du moteur s'étend jusqu'à une position du levier (35) correspondant sensiblement à une vitesse stabilisée du véhicule comprise entre 2/3 et 3/4 de la vitesse maximale du véhicule en palier.

## Patentansprüche

1. Vorrichtung zur Regelung des Abblaseventils (17) einer Brennkraftmaschine, aufgeladen durch wenigstens eine Einheit Turbine-Kompressor, die durch die Abgase des Motors in Drehungen versetzt wird, mit wenigstens einer Kapsel, die einen Kolben (22) und eine den Kolben in Schließrichtung des Ventils beaufschlagende Feder (24) enthält, wobei der Kolben einerseits dem Zufuhrdruck der Luft für den Motor stromabwärts des Kompressors ausgesetzt ist, um ein Öffnen des Ventils zu bewirken und die Turbine zu umgehen, wenn der Zufuhrdruck des Motors einen vorgegebenen Grenzwert überschreitet und andererseits einem Regelfluiddruck ausgesetzt ist, geeignet um die Öffnung des Abblaseventils (17) bei geringen Belastungen des Motors zu bewirken, mit einem Regelventil (27), gesteuert vom Beschleunigungshebel (35) des Motors zum Zuführen des Regelfluiddrucks zum Kolben, dann wenn sich der Hebel (35) in einem Bereich (36) befindet, der den geringen Belastungen des Motors entspricht, wobei das Regelventil (27) geeignet ist, einerseits eine Öffnungsstellung einzunehmen, um den Regelfluiddruck einer Regelkammer (20) zuzuführen, welche durch wenigstens einen Teil der Oberfläche des Kolbens (22) begrenzt wird und das Öffnen des Abblaseventils (17) zu bewirken, wenn sich der Hebel (35) im Bereich (oder den Stellen) (36) befindet, die den geringen Belastungen des Motors entsprechen und, andererseits, die Regelkammer (20) mit den Auslaßgasen oder der Atmosphäre (30) zu verbinden, wenn sich der Beschleunigungshebel (35) des Motors im Bereich (37) befindet, der den starken Belastungen des Motors entspricht, um ein erneutes Schließen des Abblaseventils (17) unter der Wirkung seiner Feder (24) zu ermöglichen, dadurch gekennzeichnet, daß das Steuerventil (27) ein Elektroventil ist, das vom Beschleunigungshebel mittels einer elektrischen Betätigungsschaltung (31, 32) gesteuert wird, dessen Unterbrecher- bzw. Einschaltkontakte (32) von einem Nocken oder Schieber (33) betätigbar sind, der mechanisch mit dem Beschleunigungshebel (35) verbunden ist.

2. Vorrichtung nach Anspruch 1, dadurch gekennzeichnet, daß die Regelkammer (20) auf derjenigen Seite vom Regelkolben (22) begrenzt ist, die derjenigen entgegengesetzt ist, welche dem Zufuhrdruck für den Motor ausgesetzt ist und die Feder (24) enthält, die das Ventil (17) in Schließstellung drückt, wobei der Regelfluiddruck durch den Ansaugunterdruck des Motors oder einer Vakuumpumpe gebildet wird.

3. Vorrichtung nach einem der Ansprüche 1 bis 2, dadurch gekennzeichnet, daß eine Verzögerungseinrichtung, z. B. eine Engstelle (42), in der Leitung (25) vorgesehen ist, die das Regelventil (27) mit der Regelkammer (20) verbindet, um das Öffnen und/oder das Schließen des Abblaseventils (17) unter dem Einfluß der Verschiebungen des Beschleunigungshebels (35) des Motors zu verzögern.

4. Vorrichtung nach Anspruch 3, dadurch gekennzeichnet, daß die Engstelle (42) von einer in einer Richtung durchströmbaren Anordnung, z. B. einem Rückschlagventil (43), umgangen werden kann, das ein schnelles Öffnen des Abblaseventils (17) und sein langsames Schließen oder umgekehrt ermöglicht.

5. Vorrichtung nach einem der Ansprüche 1 bis 4, dadurch gekennzeichnet, daß, wenn der Verbrennungsmotor zum Antrieb eines Kraftfahrzeuges benutzt wird, der Bereich (36), der den geringen Belastungen des Motors entspricht, sich bis zu einer Stellung des Hebels (35) erstreckt, der im wesentlichen einer stabilen Geschwindigkeit des Fahrzeugs entspricht, die zwischen zwei Drittel und drei Viertel der Maximalgeschwindigkeit des Fahrzeugs in der Ebene liegt.

## Claims

1. Apparatur for controlling the discharge valve (17) of the exhaust of an internal combustion engine with boost by at least one turbocompressor assembly which is driven in rotation by the exhaust of the engine, comprising at least one capsule containing a piston (22) and a spring (24) urging the piston in the direction of closing the valve, the piston being subjected on the one hand to the air intake pressure of the engine which obtains downstream of the compressor to cause opening of the valve and short-circuit the turbocompressor when the intake pressure of the engine exceeds a predetermined limit value, and on the other hand to a control fluid pressure which is adapted to cause opening of the discharge valve (17) under low engine load conditions, a control valve (27) which is controlled by the accelerator lever (35) of the engine to apply the control fluid pressure to the piston only when the lever (35) is placed in a region (36) corresponding to said low engine load conditions, said control valve (27) being capable on the one hand of being moved into the open position to apply the control fluid pressure to a control chamber (20) delimited by at least a part of the surface of the piston (22) and cause opening of the discharge valve (17) when the lever (35) is in the region (or the notches) (36) corresponding to the low engine load conditions, and, on the other hand, of connecting the control chamber (20) to the discharge or to atmosphere (30) when the accelerator lever (35) of the engine is placed in the region (37) corresponding to heavy engine load conditions, to permit the valve (17) to close again under the action of its spring (24), characterised in that the control valve (27) is an electrically operated valve controlled by the accelerator lever by means of an electrical actuating circuit (31, 32) whose contacts (32) for breaking or making the circuit respectively are actuated by a cam or a thrust member (33) which is mechanically connected to the accelerator lever (35).

2. Apparatus according to claim 1 characterised in that the control chamber (20) is delimited by the control piston (22) on the side opposite to that which is subjected to the intake pressure of the engine and contains the spring (24) which urges the valve (17) to its closed position, the control fluid pressure being formed by the intake depression of the engine or a vacuum pump.

3. Apparatus according to either one of claims 1 and 2 characterised in that a timing means such as a constriction (42) is interposed in the conduit (25) connecting the control valve (27) to the control chamber (20) in order to delay opening and/or closing of the discharge valve (17) under the effect of the movement of the accelerator lever (35) of the engine.

4. Apparatur according to claim 3 characterised in that the constriction (42) is capable of being short-circuited by a unidirectional flow means such as a non-return valve (43) permitting rapid opening of the discharge valve (17) and slow closure thereof, or vice-versa.

5. Apparatus according to any one of claims 1 to 4 characterised in that, when the internal combustion engine is used for propelling a motor vehicle, said region (36) corresponding to low engine load conditions extends as far as a position of the lever (35) which substantially corresponds to a steady speed of the vehicle of between two whirds and three quarters of the maximum speed of the vehicle on the flat.

0 069 632